# EUROPÄISCHE PATENTSCHRIFT

(11) **EP 0 724 952 B1**
(45) Veröffentlichungstag und Bekanntmachung des Hinweises auf die Patenterteilung: **05.08.1998**
(21) Anmeldenummer: 95117053.9
(22) Anmeldetag: 30.10.1995
(51) Int. Cl.: B29D 31/518, A43B 13/12

(54) **Sohle für Sportschuhe und Verfahren zur Herstellung einer solchen**
Sole for a sports shoe and method of producing such a sole
Semelle de chaussure de sport et procédé de fabrication d'une telle semelle

(30) Priorität: 02.02.1995 DE 19503308
(43) Veröffentlichungstag der Anmeldung: 07.08.1996
(73) Patentinhaber: Uhlsystem Deutschland GmbH, 72351 Geislingen (DE)
(72) Erfinder: Seifriz, Werner, D-72355 Schömberg-Schörzingen (DE)
(74) Vertreter: Scheffler, Dietrich, Dipl.-Ing. Dr.

(56) Entgegenhaltungen:
- WO-A-91/02469
- FR-A- 2 272 618
- FR-A- 2 323 521
- FR-A- 2 677 299

## Beschreibung

Die Erfindung bezieht sich auf eine Sohle und ein Verfahren nach den Oberbegriffen der Patentansprüche 1 und 15.

Es ist bekannter Stand der Technik, Sohlen für Sportschuhe aus verschiedenen Werkstoffen mit unterschiedlichen Eigenschaften zu fertigen. Nach Möglichkeit wird dabei ein direktes Anschäumen oder Anspritzen der verschiedenen Materialkomponenten gegenüber einem ebenfalls denkbaren Verkleben derselben bevorzugt. Durch eine derartige Kombination unterschiedlicher Werkstoffe in einer Sohle wird die Realisierung im wesentlichen folgender Ziele angestrebt:
- Eine insgesamt im Sinne eines geringen Abrollwiderstandes weiche und flexible Sohle soll bereichsweise deutlich versteift werden, beispielsweise, um eine Torsion des Schuhs zu vermeiden.
- Durch den bereichsweisen Einbau weicher, insbesondere geschäumter Teile sollen gute Dämpfungseigenschaften erzielt werden.
- Teuere, hoch beanspruchbare Werkstoffe sollen nur dort eingesetzt werden, wo sie benötigt werden. Andere, weniger stark beanspruchte Zonen sollen aus billigerem Material aufgebaut werden.
- Schließlich läßt sich eine Sohle durch die Kombination verschiedenfarbiger Einzelteile auch in dekorativer Hinsicht vorteilhaft gestalten.

Eine spezielle Gruppe von Sportschuhsohlen, um die es im Rahmen der vorliegenden Erfindung zwar nicht ausschließlich, aber doch in erster Linie geht, tragen Greifelemente, wie Spikes, Nocken oder Stollen. Für derartige Sportschuhsohlen benötigt man technische Kunststoffe mit hoher Festigkeit und Steifigkeit in den Bereichen, in denen diese Greifelemente angebracht sind. Zum einen ist eine ausreichende Festigkeit erforderlich, um ein Ausbrechen oder Ausknicken der Greifelemente zu vermeiden. Eine hohe Steifigkeit ist erwünscht, um den punktuellen Druck, der durch die Greifelemente auf die Sohle ausgeübt wird, möglichst großflächig zu verteilen.

Da derartige Sohlen nahezu ausnahmslos für Sportarten eingesetzt werden, die eine ungehinderte Lauffunktion voraussetzen (Beispiele: Fußball, Baseball, Rugby, Leichtathletik), ist es andererseits auch erwünscht, daß sie, insbesondere im Vorfußbereich, auch flexibel sind und ein weiches Abrollen des Fußes ermöglichen.

Es gilt also, alle diese vielfältigen, teilweise sogar konträren, an Sportschuhsohlen der in Rede stehenden Art gestellten Anforderungen optimal zu erfüllen. Nach dem derzeitigen Stand der Technik versucht man dieses Ziel dadurch zu erreichen, daß man die für die Anbringung der Greifelemente vorgesehenen tragenden Sohlenbereiche aus hartem Kunststoff produziert und diese harten Teile dann durch das flexible Material der Sohlenbasis umspritzt. (In seltenen Fällen wird auch umgekehrt verfahren.) Hierbei ist man auf Materialkombinationen angewiesen, die einmal die mechanischen Anforderungen erfüllen und die zum anderen beim Umspritzen einen sehr guten Schmelzverbund eingehen. Dabei haben sich zwei grundsätzliche Lösungswege durchgesetzt: Eine der Lösungen beruht auf der Anwendung modifizierter Polyamide, die durch Weichmacher oder durch den Einbau elastischer Polymerkettenelemente eine für Sportschuhanwendungen wünschenswerte Steifigkeit erhalten können.

Die zweite Lösung basiert auf thermoplastischem Polyurethan, das in verschiedenen Steifigkeitsstufen verfügbar ist, die mischbar und verschweißbar sind.

Das Prinzip der Materialkombination ist indessen bei beiden Varianten dasselbe: Man verwendet ein relativ hart eingestelltes Polyamid oder Polyurethan für die harten Sohlen-Bauteile und umspritzt diese mit einem chemisch sehr ähnlichen und mischbaren Material, das aber weicher eingestellt wurde.

In der Praxis werden allerdings die Differenzen der Biegesteifigkeit zwischen harter und weicher Materialkomponente im allgemeinen nicht allzu groß gewählt. Sie vermögen somit zum Teil nur eine sehr geringe Veränderung der Sohleneigenschaften zu bewirken, wenn man hierzu die Eigenschaften einer einkomponentig hergestellten Sohle in Vergleich setzt. Die Gründe für die erwünschten nur geringen Biegesteifigkeitsdifferenzen der verarbeiteten Materialkomponenten liegen einmal darin, daß der Prozeß der Verschmelzung am unkompliziertesten ist, wenn die beiden zu verbinderden Komponenten chemisch und physikalisch möglichst ähnlich sind. Zum anderen entstehen an der "Nahtstelle" zwischen weicher und harter Komponente bei Biegung hohe Spannungen, welche die Haltbarkeit der Schmelzverbindung aufs höchste beanspruchen. Es kommt nicht selten in der Praxis vor, daß sich harte Einlegeteile bei vielfacher Biegung aus der Sohle lösen, entweder durch Lösen der Verschweißung oder durch Materialbruch in einer der Materialkomponenten. Im übrigen ist ein plötzlicher Steifigkeitssprung im Schuh anatomisch nicht wünschenswert, weil er zu einem Abknicken des Schuhs führt. Erwünscht wäre aber vielmehr ein weicher und großer Biegeradius der Sohle bzw. des Schuhs.

Aufgabe der vorliegenden Erfindung ist es, einen neuartigen Sohlenaufbau zu schaffen, der im Vergleich zu den heutigen aus verschiedenen Materialien kombinierten Sohlen einen geringeren Material- und Herstellungsaufwand ermöglicht und Brüche an den Verbindungsstellen der Materialkomponenten oder innerhalb einer Materialkomponente selbst weitestgehend vermeidet.

Gemäß der Erfindung wird die Aufgabe bei einer Sportschuhsohle der eingangs bezeichneten Art durch die im kennzeichnenden Teil des Patentanspruchs 1 bzw. des Patentanspruchs 15 angegebenen Merkmale bzw. Maßnahmen gelöst.

Der Aufbau der erfindungsgemäßen Sportschuhsohle entspricht einer sogenannten Sandwichkonstruktion, mit der unter Verwendung von zwei dünnen, nicht notwendigerweise biegesteifen, jedoch zugfesten Materiallagen unter Zwischenschaltung Materials ein biegesteifer Gesamtaufbau hergestellt wird. Die Biegesteifigkeit des Aufbaus steigt in der dritten Potenz mit dem Abstand der beiden zugfesten Materiallagen.

Zwar ist das Prinzip der Sandwichkonstruktion als solches an sich bekannt. Es wird jedoch üblicherweise bei Bauteilen angewandt, an die sehr hohe Steifigkeitsanforderungen gestellt werden, z. B. Flugzeugholme, Skier etc. Im Falle von Sportschuhsohlen hingegen ist aus anatomischen Gründen eine nur sehr moderate Biegesteifigkeit erwünscht, so daß sich hier eine Anwendung des bekannten Sandwichprinzips nicht von vornherein angeboten hat.

Ein wesentlicher Vorteil der Erfindung ist darin zu sehen, daß die im Falle der hier in Rede stehenden Sportschuhsohlen wünschenswerte (moderate) Biegesteifigkeit bereits mit Decklagen aus einem Kunststoff realisierbar ist, dessen Zugfestigkeit nur sehr wenig höher ist als die der Basissohle, d. h. des Sohlenkörpers. Die Decklagen können daher aus einem Kunststoff bestehen, der dem Kunststoff des Sohlenkörpers (der Basissohle) chemisch sehr ähnlich ist und mit diesem eine entsprechend gute Schmelzverbindung eingeht.

Für das zwischen außen- und innenseitiger Decklage angeordnete Material der erfindungsgemäßen Sandwichkonstruktion, also den Sohlenkörper, besteht praktisch lediglich die (leicht erfüllbare) Forderung nach ausreichender Drucksteifigkeit. Das zwischengeschaltete Material ist in diesem Fall das Material der Basissohle. Dieses die Basissohle bildende Sohlenkörpermaterial ist im allgemeinen massiv und erfüllt die Anforderungen an die Drucksteifigkeit bei weitem.

Wie bereits oben ausgeführt, sind sprungartige Steifigkeitsübergänge innerhalb der Sohle sowohl aus anatomischen wie auch aus Festigkeitsgründen unerwünscht. Derartige Steifigkeitssprünge lassen sich in vorteilhafter Weiterbildung der Erfindung ohne nennenswerten Mehraufwand durch die im Patentanspruch 2 angegebenen Merkmale unterbinden. Diese Merkmale ermöglichen vielmehr eine anatomisch wünschenswerte Biegung der Sohle statt eines abrupten Sohlenknicks. Außerdem werden Materialspannungen an der Schmelzverbindungsstelle zwischen Sohlenkörper und Decklage auf der Sohlenvorderseite (Lauffläche) praktisch völlig vermieden.

Eine weitere Ausgestaltung der Erfindung beinhaltet Patentanspruch 3. Hierdurch lassen sich scharfkantige Materialübergänge zwischen Decklagen und Sohlenkörper auf Außen- und Innenseite der Sohle vermeiden, was der Festigkeit der Sohle insgesamt zugute kommt.

Eine besonders vorteilhafte Ausführungsform der Erfindung ist Patentanspruch 4 zu entnehmen. Weiterbildungen dieses Gedankens enthalten die Patentansprüche 5 bis 7.

Die demgemäß die Decklagen bildenden Faserverbundteile sollten nicht nur aus Gewichtsgründen dünn und folienartig mit jeweils nur einer Lage von Verstärkungsfasern ausgebildet sein, sondern auch deshalb, weil man keine hohe Biegesteifigkeit eines jeden Faserverbundteils, sondern die hohe Zugfestigkeit der Verstärkungsfasern nutzen will. Wenn das Matrixmaterial der Faserverbundteile (Decklagen) dem Material der Basissohle (Sohlenkörper) möglichst ähnlich ist, hat dies den Vorteil einer guten chemischen Verträglichkeit und Mischbarkeit und damit auch einer guten Schweißbarkeit der beiden zu verbindenden Materialien von Sohlenkörper einerseits und Decklagen andererseits.

Für den Fall einer Herstellung der Basissohle (des Sohlenkörpers) aus elastomerem Material auf Polyamid 12-Basis sollten nach einer anderen Ausführungsform der Erfindung die Decklagen aus modifiziertem Polyamid 12 bestehen. Die Vorteile liegen, wie oben schon geschildert, in der chemischen Ähnlichkeit der beiden Materialien. Außerdem können Folien aus modifiziertem Polyamid 12 im sogenannten Sublimationsverfahren dauerhaft und kratzfest bedruckt werden. Somit lassen sich nach der Erfindung nicht nur sehr gut verstärkte Sohlen, sondern auch solche mit dekorativ bedruckten und gewölbten Oberflächen herstellen.

Ein weiterer Schwerpunkt bei den durch die Erfindung erzielbaren Vorteilen liegt auf dem Sektor des sogenannten Recyclings. Bekanntermaßen ist es zunehmend in allen industriellen Bereichen, insbesondere aber in der Kunststoffproduktion aus ökologischen und auch aus wirtschaftlichen Gründen eine Notwendigkeit, die Wiederverwertung von Altmaterial sicherzustellen. Dieses berechtigterweise vielfach geforderte Materialrecycling erwies sich aber speziell auf dem Gebiet der Sohlenfertigung in vielerlei Hinsicht als problematisch. Zum einen erhält man bei der Wiederverwertung von Schuhsohlen farblich gemischtes Material. Solches ist aber nur für schwarze Bauteile wieder einsetzbar. Auch bei der Bemühung um sortenreines Material muß man bei der Wiederverwendung einen erhöhten Verunreinigungsgrad in Kauf nehmen. Außerdem ist das Material in der Wiederverwendung teilweise thermisch vorgeschädigt. Die beiden letztgenannten Unzulänglichkeiten reduzieren die Materialqualität in einem Maße, daß man derartiges Material nicht mehr wie Neuware für hochgradig biegebeanspruchte Sportschuhsohlen einsetzen kann. (Alternative Anwendungen mit geringeren mechanischen Anforderungen finden sich für elastomeres Polyurethan- oder Polyamid-Material nicht in ausreichendem Maße.) Bei der erfindungsgemäßen nach dem Sandwichprinzip aufgebauten Sohle kommt es nun bei dem die Basissohle bildenden Sohlenkörper - wie bereits oben ausgeführt - ausschließlich auf eine ausreichende Drucksteifigkeit an, die aber nahezu bei jedem in Betracht kommenden Kunststoffmaterial ohne weiteres gegeben ist. Wie bereits erläutert, werden hohe mechanische Anforderungen in erster Linie an die Sandwich-Decklagen gestellt.

In weiterer Ausgestaltung der Erfindung kann daher die aus Patentanspruch 9 entnehmbare Maßnahme vorgeschlagen werden, die sich in sehr zweckmäßiger Weise durch die Merkmale des Patentanspruchs 10 ergänzen läßt. Es ist nämlich ohne weiteres möglich, eine derartige bedruckte oder unbedruckte außenseitige Verstärkungsfolie die gesamte Sohlenlauffläche bedeckend anzuordnen. Man erhält so eine vollflächige dekorative Sohlengestaltung mit sehr großen gestalterischen Freiheiten. Eine solche vollflächige Abdeckung versteift die Sohle an denjenigen Stellen nur wenig, auf die sich die rückseitige (innenseitige) Decklage nicht auch erstreckt.

Es ist deshalb ohne weiteres möglich, die laufflächenseitige Decklage als solche bis in die Biegebereiche der Sohle im Vorfußbereich hinein zu erstrecken und eine Kombination mit den aus Patentanspruch 11 entnehmbaren Merkmalen vorzunehmen.

Weitere vorteilhafte Ansgestaltungen der Erfindung, was deren gegenständlichen Teil anbelangt, enthalten die Patentansprüche 12 und 13. Die Ausführungsform nach Patentanspruch 12 vermeidet insbesondere thermischen Verzug. Es ist aber auch möglich, die beiden Decklagen unterschiedlich aufzubauen (Patentanspruch 13). Wenn beispielsweise die rückseitige (innenseitige) Decklage faserverstärkt ausgeführt ist, so empfiehlt es sich, bei einer über die gesamte Sohlenlänge durchlaufenden vorderseitigen (laufflächenseitigen) Decklage dennoch unverstärktes Material einzusetzen, da die Faserverstärkung die Abrolleigenschaften im Vorfußbereich negativ beeinflussen würde.

Wie bereits weiter oben erläutert, ist der den Sohlenkörper (Basissohle) bildende Kunststoff als Kernwerkstoff der Sandwichkonstruktion praktisch überdimensioniert, wo er nur auf Druck belastet wird. Andererseits kann die Steifigkeit der Konstruktion durch Erhöhung der Bauhöhe drastisch erhöht werden. Durch die aus Patentanspruch 14 entnehmbare Maßnahme gelingt es ohne gleichzeitige Gewichtserhöhung, dem Sohlenkörper im Bereich des Sandwichaufbaus die gewünschte relativ große Bauhöhe zu geben. Bei derartiger Sohlen kommt es wesentlich darauf an, daß die Bauhöhe im Verstärkungsbereich wesentlich größer ist als im Biegebereich des Vorfußes. Mar erhält also durch die in Rede stehende Maßnahme Bauteile mit hochsteifen Verstärkungszonen bei zugleich sehr geringem Gewicht.

In verfahrensmäßiger Hinsicht wird die der Erfindung zugrundeliegende Aufgabe durch die aus Patentanspruch 15 entnehmbaren Maßnahmen gelöst. Allerdings ist das Einspritzen des den Sohlenkörper bildenden Basis-Kunststoffmaterials zwischen die in eine Spritzform parallel und im Abstand eingelegten Decklagen aus relativ biegeweichem, folienartigen Material keineswegs ein trivialer Vorgang. Es ist nämlich nicht einfach, die beiden Decklagen sicher auf Abstand zu halten, derart, daß diese Decklagen beim Einspritzvorgang flächig an der vorderen bzw. hinteren Wandung der Spritzform anliegen. Patentanspruch 16 gibt dem Fachmann hierfür eine wertvolle praktische Anleitung an die Hand. Die Einspritzöffnung der Spritzform wird also hierbei in das Zentrum dieser Decklagen-Ausnehmung gelegt, wobei deren Durchmesser - vorzugsweise - erheblich größer sein sollte als der Durchmesser der Einspritzöffnung der Spritzform. Das Kunststoffmaterial läßt sich auf diese Weise zunächst ins Zentrum zwischen den beiden Decklagen einspritzen, so daß der Spritzdruck von diesem Zentrum aus auf die Decklagen wirkt und diese gegen die Spritzformwandungen drückt.

Eine weitere Ausgestaltung des erfindungsgemäßen Verfahrens enthält Patentanspruch 17. Zugleich lehrt dieser Patentanspruch den Fachmann, wie er das im Patentanspruch 14 enthaltene gegenständliche Merkmal in einfacher Weise praktisch realisieren kann. Vorteilhaft wirkt sich hierbei im übrigen auch die Tatsache aus, daß das mit einem thermisch aktivierbaren Treibmittelzusatz versehene Basismaterial (Sohlenkörpermaterial) bei geeigneter Mischung und Produktionsparametern nur in den großvolumigen Zonen aufschäumen wird, nicht oder nur unwesentlich jedoch in den dünnen Bauteilbereichen.

Für den Fall, daß die Decklagen den Funktionen der Sohle gerechtwerdende Bauteil-Wölbungen erhalten sollen, gibt Patentanspruch 18 dem Fachmann wertvolle Verfahrenshinweise an die Hand. Abhängig von der Geometrie der Formteilwölbung kann es erforderlich sein, die Folien (Decklagen) punktuell an der Formoberfläche zu fixieren, z. B. durch Stifte, auf welche die Folie aufgesteckt wird. Man erhält so geformte Verstärkungsteile, ohne daß man eine separate Form zur Herstellung derselben benötigt. Dieses Verfahren der sogenannten "In situ"-Formung der Verstärkungsteile bei der Sohlenherstellung läßt sich - allerdings innerhalb gewisser Grenzen - auch dann anwenden, wenn es sich bei den Decklagen um Faserverbundteile (siehe Patentanspruch 4ff) handelt. Die Grenzen sind hierbei durch die Verformbarkeit der Verstärkungsfaserstruktur vorgegeben.

Zur weiteren Erläuterung und zur Veranschaulichung der Erfindung dienen Ausführungsbeispiele, die in der Zeichnung dargestellt und im folgenden beschrieben sind. Es zeigen:
- Fig. 1 und 2: eine Ausführungsform einer mit Stollen ausgestatteten Sportschuhsohle, im vertikalen Längsschnitt,
- Fig. 3 und 4: zwei gegenüber Fig. 1 und 2 jeweils etwas abgewandelte Varianten einer stollentragenden Sportschuhsohle, in Schnittdarstellung entsprechend Fig. 1,
- Fig. 5 und 6: eine weitere Ausführungsform einer Sportschuhsohle, in Draufsicht auf die Innenseite (Fig. 5) bzw. auf die Außenseite (Lauffläche) (Fig. 6) betrachtet,
- Fig. 7: einen Schnitt längs der Linie VII-VII in Fig. 6,
- Fig. 8: den Gegenstand von Fig. 7 als sogenannte Explosionsdarstellung,
- Fig. 9 u. 10: eine weitere Ausführungsform einer Sportschuhsohle, in Draufsicht entsprechend Fig. 5 bzw. Fig.6,
- Fig. 11: einen Schnitt längs der Linie XI-XI in Fig. 9,
- Fig. 12: den Gegenstand von Fig. 11 als sogenannte Explosionsdarstellung,
- Fig. 13: eine weitere Ausführungsform einer Sportschuhsohle, in Draufsicht entsprechend Fig. 5 und 9,
- Fig. 14: einen Schnitt längs der Linie XIV-XIV in Fig. 13, und
- Fig. 15: den Gegenstand von Fig. 14 als sogenannte Explosionsdarstellung.

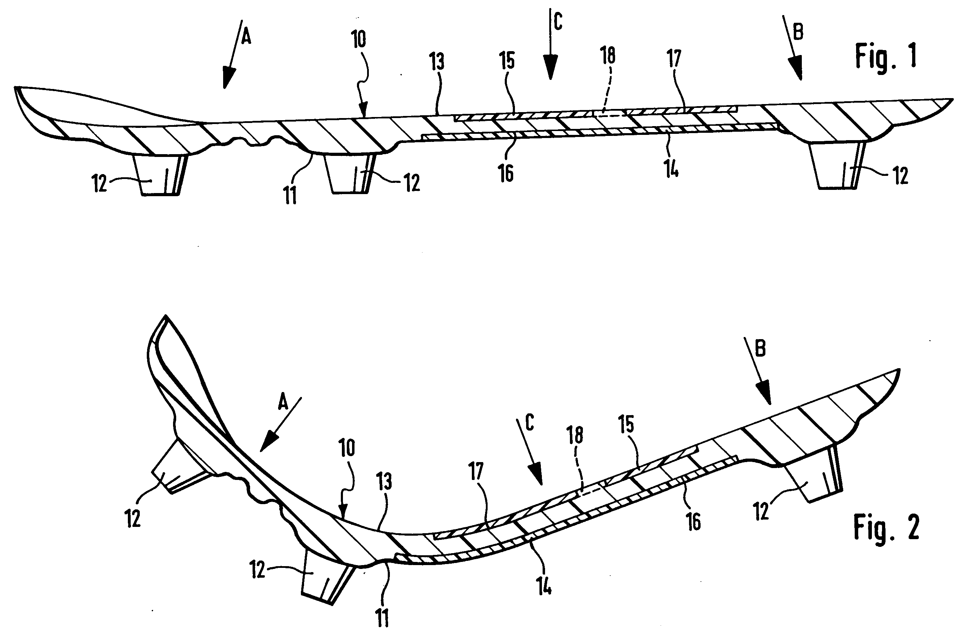

Die aus Fig. 1 und 2 ersichtliche Sportschuhsohle ist insbesondere für Fußballschuhe vorgesehen. Es bezeichnet 10 einen Sohlenkörper, der die sogenannte Basissohle bildet. Der Sohlenkörper 10 besteht aus einem flexiblen thermoplastischen Kunststoffmaterial mit ausreichender Drucksteifigkeit, vorzugsweise einem recyclierten Material auf der Basis von Polyamid, insbesondere Polyamid 12, oder elastomerem Polyurethan, und ist durch Spritzen hergestellt. Selbstverständlich ist es aber auch möglich (wenn auch mit höheren Kosten verbunden), für die Herstellung des Sohlenkörpers 10 entsprechende Kunststoff-Neuware zu verwenden.

An der mit 11 bezifferten Außenseite (Lauffläche) des Sohlenkörpers 10 sind Greifelemente 12 befestigt, die als Schraubstollen oder einstückig an den Sohlenkörper 10 angeformte Nocken ausgebildet sein können. Die von der Lauffläche 11 abgewandte Innenseite des Sohlenkörpers 10 ist mit 13 bezeichnet. Sie ist in üblicher Weise mit einem geeigneten Schuh-Obermaterial verbunden, welches jedoch nicht unmittelbar Gegenstand der Erfindung ist, weshalb auf eine entsprechende Darstellung verzichtet wurde. Um Fehlverständnis zu vermeiden, ist der Vorfußbereich der Sohle durch einen Pfeil A und der Fersenbereich durch einen Pfeil B kenntlich gemacht. Dazwischen erstreckt sich der Mittelbereich C der Sohle.

Während im Vorfußbereich A eine hohe Flexibilität der Sohle erwünscht ist, um ein weiches Abrollen des Fußes bei der Laufbewegung zu ermöglichen (vgl. Fig. 2), sollte dagegen der Mittelbereich C (einschließlich Fersenbereich B)der Sohle eine hohe Biegesteifigkeit aufweisen, um den mechanischen Anforderungen im Sportbetrieb wie auch den anatomischen Gegebenheiten des Fußes optimal gerecht zu werden. Die Sohlenbereiche C und B sollen demgemäß auch während des Abrollvorganges des Fußes (Fig. 2) ihre im ursprünglichen (unbelasteten) Zustand vorhandene ebene Form (Fig. 1) weitestgehend beibehalten.

Um der Sohle diese vorteilhaften Fähigkeiten zu verleihen, sind an der Außenseite 11 (also laufflächenseitig) und an der Innenseite 13 des Sohlenkörpers 10 vergleichsweise dünnschichtig dimensionierte Decklagen 14 und 15 angeordnet, so daß die Sportschuhsohle insgesamt einen sandwichartigen Aufbau erhält. Die - sich vorzugsweise über die gesamte Sohlenbreite erstreckenden - Decklagen 14, 15 zeichnen sich durch eine hohe Zugfestigkeit aus. Sie sollten - zumindest überwiegend - aus einem dem Sohlenkörpermaterial chemisch ähnlichen oder identischen, jedoch höheren Härtegrad aufweisenden Kunststoffmaterial bestehen, um eine feste Schmelzverbindung (Schweißverbindung) zu der Basissohle (Sohlenkörper 10) zu ermöglichen. Aufgrund des Sandwich-Aufbaus (relativ großer Abstand zwischen den parallelen Decklagen 14, 15) benötigen diese eine nur vergleichsweise wenig höhere (Zug-)Steifigkeit als das Basismaterial des Sohlenkörpers 10. Trotzdem ermöglichen sie eine hohe Biegesteifigkeit der Gesamtsohle in deren Bereich zwischen den Decklagen 14, 15 (insbesondere Mittelbereich C). Durch die geringen Steifigkeitsunterschiede zwischen Sohlenkörpermaterial 10 und Decklagen 14, 15 wird ein guter Schmelzverbund zwischen den Komponenten begünstigt.

Wie Fig. 1 und 2 des weiteren erkennen lassen, sind die Decklagen 14, 15 in entsprechenden Vertiefungen 16, 17 des Sohlenkörpers 10 gewissermaßen versenkt angeordnet, so daß sich an der jeweiligen Außenseite 11 wie an der Innenseite 13 des Sohlenkörpers 10 jeweils glatte Oberflächen ohne Stufensprünge ergeben.

Eine Besonderheit der Ausführungsform nach Fig. 1 und 2 besteht darin, daß die innenseitige Decklage 15 von der laufflächenseitigen Decklage 14 in Fußlängsrichtung sowohl nach vorn wie auch nach hinten überragt wird. Diese vorteilhafte Maßnahme trägt der Forderung Rechnung, daß ein plötzlicher Steifigkeitssprung innerhalb der Gesamtsohle aus anatomischen und Festigkeitsgründen nicht wünschenswert ist, weil er zu einem abrupten Abknicken der Sohle führen würde. Vielmehr ermöglicht die in Rede stehende Maßnahme einen erwünschten weichen und großen Biegeradius der Sohle im Vorfußbereich (siehe Fig. 2). Innerhalb der Sohlenbereiche, in denen nur noch die laufflächenseitige Decklage 14, aber nicht mehr die innenseitige Decklage 15 vorliegt, ist die Gesamtsohle gegenüber dem reinen Basismaterial (Sohlenkörper 10) kaum mehr versteift, so daß es auch an den Kanten der laufflächenseitigen Decklage 14 zu keinem nennenswerten Steifigkeitssprung und damit auch nicht zu gefährlichen Materialspannungen kommt.

Was die Herstellung des aus Fig. 1 und 2 ersichtlichen und im vorstehenden geschilderten Sohlenaufbaus anbelangt, so sollten die beiden vorgefertigten Decklagen 14, 15 in der für die Sohlenherstellung vorgesehenen Spritzform in dem ihrer Endstellung (Fig. 1 und 2) entsprechenden Abstand angeordnet sein und können anschließend von dem den Sohlenkörper 10 bildenden thermoplastischen Kunststoffmaterial umspritzt werden. Als sehr hilfreich hat es sich hierbei erwiesen, in eine der beiden Decklagen 14, 15, vorzugsweise in die obere (15, siehe Fig. 1 und 2), eine zentrische Ausnehmung 18 einzustanzen und die Einspritzöffnung der Spritzform an diesen Ort zu legen. Zweckmäßigerweise sollte der Durchmesser der Ausnehmung 18 größer sein als der Durchmesser der Einspritzöffnung der Spritzform (nicht dargestellt). Das den Sohlenkörper 10 bildende Kunststoffmaterial gelangt somit zunächst in den Zwischenraum zwischen den beiden Decklagen 14, 15. Alsbald wirkt dann der Spritzdruck von diesem zentralen Bereich aus auf die Decklagen 14, 15 und drückt diese gegen die jeweils zugeordnete Wandung der Spritzform. Aufgrund der geschilderten Maßnahme entfallen aufwendige Abstandshalter für die Positionierung der Decklagen 14, 15 in der Spritzform.

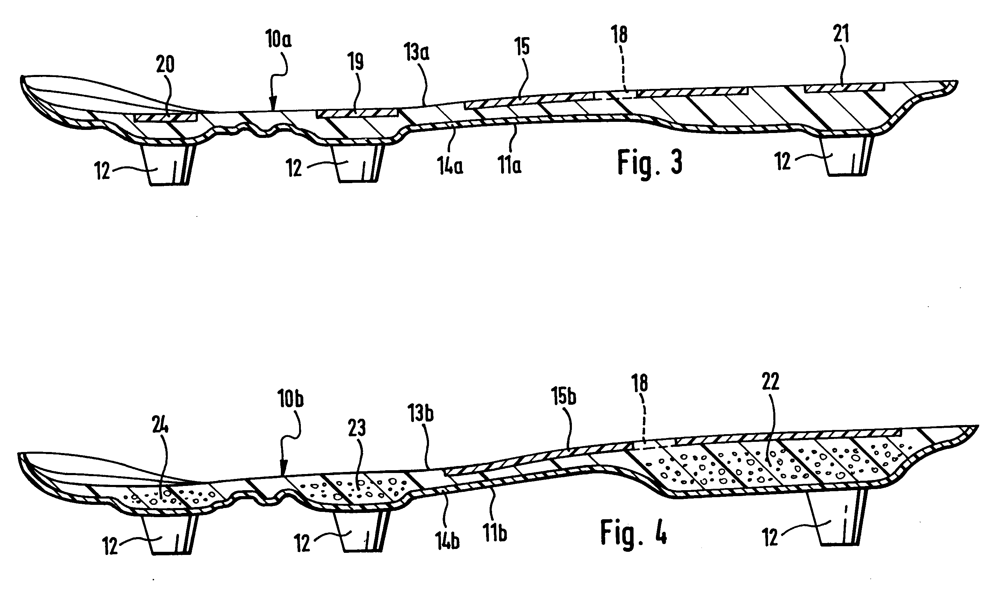

Bei den Ausführungsformen nach Fig. 3 und 4 handelt es sich ebenfalls um Fußballschuhsohlen. Die der Ausführungsform nach Fig. 1 und 2 entsprechenden Teile sind deshalb in Fig. 3 und 4 der besseren Übersichtlichkeit halber mit den auch in Fig. 1 und 2 verwendeten Bezugszeichen versehen, jedoch bei Abweichungen gegenüber Fig. 1 und 2 durch die Buchstaben a bzw. b ergänzt.

Eine den Varianten nach Fig. 3 und 4 gemeinsame Besonderheit besteht darin, daß die laufflächenseitige Decklage 14a (Fig. 3) bzw. 14b (Fig. 4) sich über die gesamte Außenseite 11a bzw. 11b des Sohlenkörpers 10a bzw. 10b erstreckt. Diese Konzeption hat für die Praxis wesentliche Vorzüge. Zum einen wird der Sohlenkörper 10a bzw. 10b auf der (sonst sichtbaren) Außenseite (laufflächenseitig) vollständig kaschiert. Dies ermöglicht es, für den Sohlenkörper 10a bzw. 10b recycliertes, im allgemeinen farblich gemischtes Kunststoffmaterial zu verwenden. (Derartiges Recycling-Material ist nur für schwarz einzufärbende Bauteile einsetzbar.) Bei der farblichen und in sonstiger Weise dekorativen Gestaltung der (sichtbaren) Sohlenlauffläche stehen aber dennoch alle Möglichkeiten offen. Hierfür steht nämlich die (aus hochwertiger Neuware gefertigte) Decklage 14a, 14b zur Verfügung. Diese läßt sich in nahezu beliebiger Weise einfärben und/oder durch Bedrucken farblich dekorativ gestalten. Außerdem wird durch die zugfeste, die gesamte außenseitige Sohlenfläche bedeckende Decklage 14a bzw. 14b die für das den Sohlenkörper 10a bzw.10b bildende Recycling-Material in Kauf zu nehmende reduzierte Materialqualität (hinsichtlich Biegebeanspruchbarkeit) mehr als kompensiert.

Was die innenseitigen Decklagen anbelangt, so zeichnet sich die Variante nach Fig. 3 durch die Konzeption einer zonenweisen Versteifung der Sohle durch entsprechend lokale Anordnung einzelner Decklagen auf der Innenseite 13a aus. So ist nicht nur im Mittelbereich der Sohle eine Decklage 15 (wie bei der Ausführungsform nach Fig. 1 und 2) mit Ausnehmung 18 (für die Einspritzung des Sohlenkörpermaterials 10a) vorgesehen. Vielmehr sind weitere (kleinerflächige) Decklagen 19, 20, 21 im Bereich der Greifelemente 12 (Stollen) angeordnet, um diese besonders stark beanspruchten Sohlenbereiche - jeweils im Zusammenwirken mit der laufflächenseitigen durchgehenden Decklage 14a - lokal zu versteifen.

Die Variante nach Fig. 4 ähnelt in ihrer äußeren Gestaltung der Ausführungsform nach Fig. 3. Im Unterschied zu Fig. 3 ist jedoch nach Fig. 4 auf der Innenseite 14b des Sohlenkörpers 10b nur eine einzige - mit 15b bezifferte - Decklage angeordnet. Ein wesentlicher Unterschied zur Ausführungsform nach Fig. 3 besteht ferner darin, daß das Material des Sohlenkörpers 10b in einzelnen Bereichen 22, 23, 24, die in besonderem Maße druckbelastet sind, aufgeschäumt ist. Da die für den Sohlenkörper 10a (Fig. 3) bzw. 10b (Fig. 4) geforderte Drucksteifigkeit praktisch von jedem der in Frage kommenden Kunststoffe (z. B. Polyamid, Polyurethan), auch von Recycling-Material, ohne weiteres erfüllt wird, ist der Sohlenkörper (10a bzw. 10b) als Kern des Sandwichaufbaus der Sohle nahezu immer dort überdimensioniert, wo er nur auf Druck belastet wird. Die aufgeschäumten Sohlenkörperbereiche 22, 23 und 24 in Fig. 4 erfüllen deshalb die Aufgabe, eine in den betreffenden Bereichen gewünschte vergleichsweise große Bauhöhe zu realisieren, dabei aber gleichzeitig Gewicht einzusparen. Darüber hinaus wird durch die Aufschäumung ein sehr vorteilhafter Dämpfungseffekt (Schonung des Fußes vor lokalen Überbelastungen) erzielt. Die lokale Aufschäumung (an den Stellen geforderter großer Bauhöhe) läßt sich in einfacher Weise durch Beigabe eines thermisch aktivierbaren Treibmittelzusatzes zu dem Basiswerkstoff des Sohlenkörpers 10b erreichen.

Wie bereits oben angedeutet, gleichen sich die Ausführungsformen nach Fig. 3 und 4 in ihrem äußeren Erscheinungsbild. Dies ist insbesondere auf die laufflächenseitige Gestaltung des Sohlenkörpers 10a bzw. 10b und der diesen dort flächendeckend kaschierenden Decklage 14a bzw.14b zurückzuführen. Die, wie dargestellt, vielfache Wölbung der Decklage 14a bzw. 14b läßt sich durch entsprechende Vorformung derselben realisieren. Eine Vorformung (ganz oder teilweise) kommt dann in Betracht, wenn es sich bei den Decklagen 14a, 14b um sogenannte Faserverbundteile (= Kunststoff-Matrix mit in diese eingelegten, vorzugsweise endlosen und gerichteten, Verstärkungsfasern) handelt.

Bestehen die Decklagen 14a, 14b (und ggf. auch die innenseitigen Decklagen 15, 15b, 19, 20, 21) aus einem nicht mit Fasern verstärkten Kunststoff (z. B. einem Polyamid), so wird aus Gründen eines weit geringeren Aufwands ein anderes Verfahren bevorzugt, wonach die entsprechend den äußeren Sohlenkonturen zugeschnittenen Decklagen als flache Folienteile in die Spritzform eingelegt werden, die an einer oder an beiden Oberflächen gemäß der gewünschten Gestaltung der Sohle entsprechende Wölbungen aufweist. Während des Spritzvorganges (Einspritzung des Sohlenkörpermaterials 10a bzw. 10b) nimmt dann die Decklage 14a bzw. 14b unter dem Einfluß von Spritzdruck und -temperatur die aus Fig. 3 bzw. Fig. 4 ersichtliche endgültige vielfach gewölbte Gestalt an.

Grundsätzlich ist dieses im vorstehenden geschilderte sehr kostengünstige sogenannte "In situ"-Verfahren zwar auch dann anwendbar, wenn die (äußere) Decklage 14a bzw. 14b nicht aus homogenem Kunststoffmaterial besteht, sondern als Faserverbundteil (siehe oben) ausgebildet ist. Allerdings werden einer solchen Verformung der Faserverbundteile während des Spritzvorganges durch die Verformbarkeit der Verstärkungsfaserstruktur gewisse Grenzen gesetzt.

Zusammenfassend zeichnen sich die Ausführungsformen nach Fig. 3 und 4 bezüglich des Sohlenkörpers 10a bzw. 10b durch eine kostengünstige Herstellung aus Recycling-Kunststoff aus. Da indessen die gesamte Sohlenlauffläche dank der diese flächendeckend beschichtenden Decklage 14a bzw. 14b durchgehend aus erstklassigem hochfestem Material besteht, kann es nicht zu Dauerbiegebrüchen kommen, was andernfalls hinsichtlich des recyclierten Sohlenkörper-Materials (10a, 10b) als solchen zu erwarten wäre. Der (aus Recycling-Material bestehende) Sohlenkörper 10a bzw. 10b kann vollständig (wie ohnehin nicht anders möglich) in schwarzer Einfärbung gespritzt werden. Dennoch läßt sich die Sohle außenseitig (laufflächenseitig) farblich völlig frei dekorieren, weil sie ja dort durch die zugfeste äußere Decklage 14a bzw. 14b abgedeckt ist.

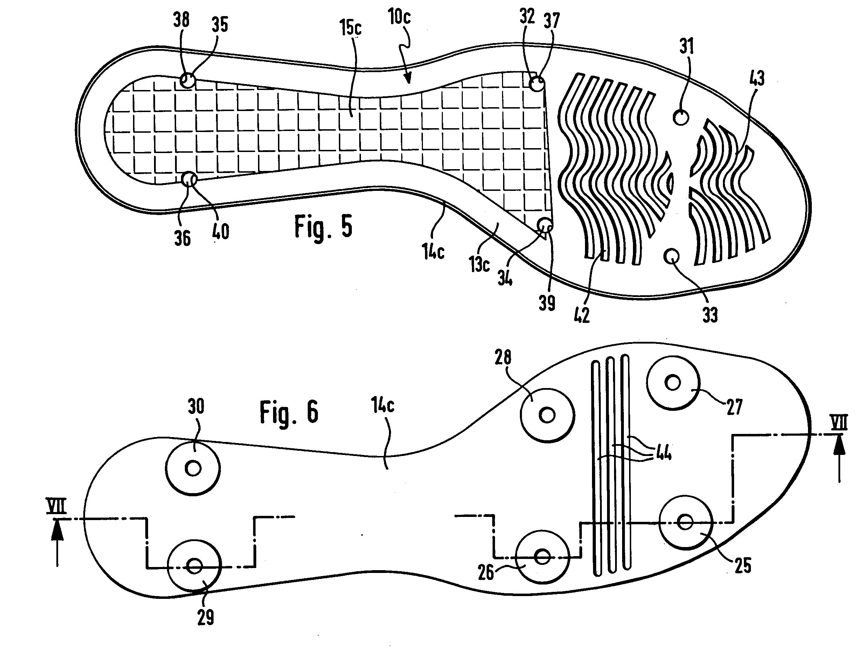

Fig. 5 bis 8 zeigen eine Ausführungsform einer Sportschuhsohle, deren Sohlenkörper 10c, insbesondere im Vorfußbereich A, stark profiliert ausgebildet ist, und zwar auf der Außenseite 11c (laufflächenseitig) wie auch auf der Innenseite 13c. So dienen insgesamt sechs verdickt ausgewölbte Zonen 25 bis 30 (siehe insbesondere Fig. 6) zur Aufnahme von Greifelementen, wie Stollen oder dergleichen (nicht dargestellt). Auf der Innenseite 13c des Sohlenkörpers 10c sind im Zentrum dieser Zonen Vertiefungen 31 bis 36 eingeformt (siehe Fig. 5, 7 und 8).

Die Ausführungsform nach Fig. 5 bis 8 zeichnet sich ferner dadurch aus, daß - ähnlich wie bei der Variante nach Fig. 3 und 4 - die Außenseite 11c des Sohlenkörpers 10c über dessen gesamte Länge und Breite mit einer Verstärkungsfolie (Decklage 14c) aus einem hochwertigen, ausreichende Zugfestigkeit aufweisenden Kunststoffmaterial (z. B. Polyamid 12) beschichtet ist, das jedoch gleichwohl dem Material des Sohlenkörpers 10c (z. B. recyclierter Kunststoff auf Polyamid-Basis) chemisch so ähnlich sein sollte, daß eine feste und dauerhafte Schmelzverbindung der Teile 10c, 14c gewährleistet ist.

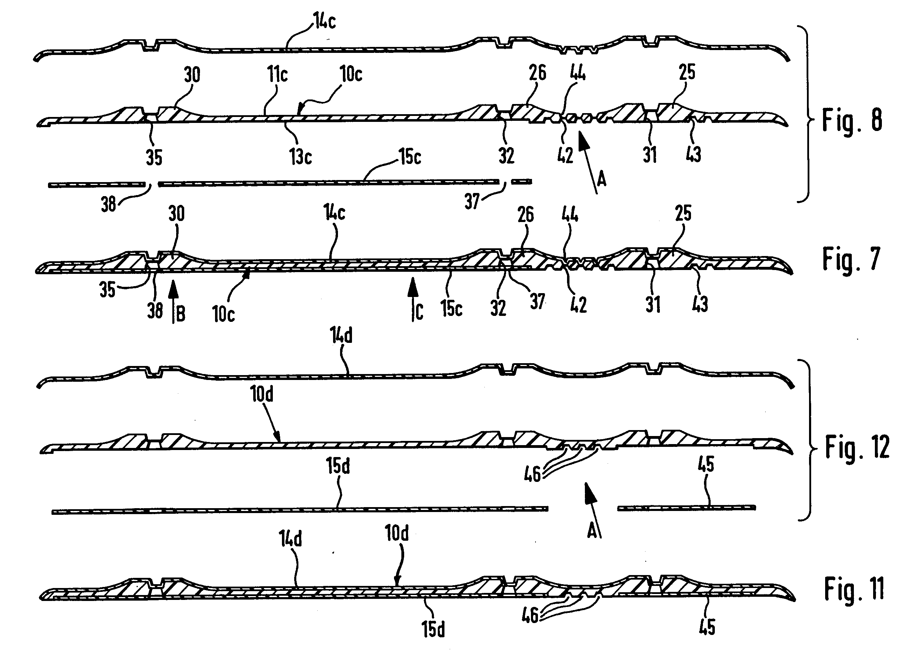

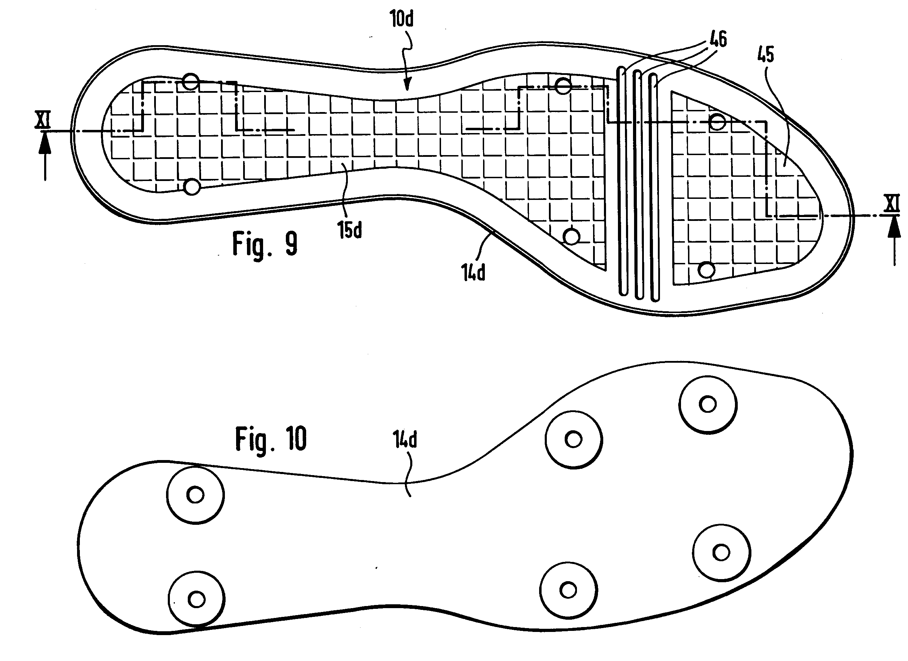

Wie insbesondere Fig. 7 und 8 erkennen lassen, folgt die außenseitige und somit die Lauffläche der Sohle bildende Decklage 14c der Profilierung und Konturierung des Sohlenkörpers 10c in allen Einzelheiten. Sie ist sogar am umlaufenden Rand des Sohlenkörpers 10c bis zur Innenfläche 13c seitlich, vorn und hinten (siehe Fig. 7 und 8) hochgezogen, wie die entsprechende umlaufende Linie 14c in Fig. 5 deutlich macht. Dadurch ist sichergestellt, daß die Sohle in ihren Eigenschaften - optisch wie auch hinsichtlich der geforderten Funktionen, insbesondere hinsichtlich Festigkeit, Verschleißfestigkeit, aber auch bezüglich farblicher und sonstiger dekorativer Gestaltung - vollständig durch die außenseitige Decklage 14c bestimmt und geprägt ist.

Ausgangsmaterial für die - im Endzustand (Fig. 7 und 8) vielfältig profilierte - außenseitige Decklage 14c kann ein ebenflächiges Folienmaterial sein, welches lediglich auf die Außenkontur des Sohlenrandes zugeschnitten zu sein braucht. Die Weiterverarbeitung (Verformung und Schmelzverbindung mit dem Sohlenkörper 10c) kann dann in einfacher und damit sehr zweckmäßiger Weise während des Spritzprozesses des Sohlenkörpers 10c erfolgen, so wie dies bereits oben im Zusammenhang mit der Beschreibung der Ausführungsformen nach Fig. 3 und 4 geschildert worden ist.

Eine zur Komplettierung des Sandwichaufbaus der Sohle auf der Innenseite 13c des Sohlenkörpers 10c angeordnete zweite Decklage 15c erstreckt sich, wie aus Fig. 5, 7 und 8 hervorgeht, nur über den Mittelfußbereich C und den Fersenbereich B des Sohlenkörpers 10c. Es handelt sich hierbei um diejenigen Sohlenzonen, für die eine hohe Biegesteifigkeit gefordert wird, um einerseits anspruchsvollem Sportbetrieb zu genügen, andererseits Fußverletzungen oder -überbeanspruchungen nach Möglichkeit von vornherein zu vermeiden. Allerdings ist es, wie Fig. 5 erkennen läßt, nicht erforderlich, daß sich die innenseitige Decklage 15c in Breite und Länge bis zum äußeren Rand des Sohlenkörpers 10c hin erstreckt.

Bei dem Ausgangsmaterial für die innenseitige Decklage 15c handelt es sich - vorzugsweise - um ein ebenflächiges faserverstärktes Kunststoff-Folienteil, als sogenanntes Faserverbundteil bekannt (siehe hierzu die obige detaillierte Beschreibung), welches auch in seinem verarbeiteten, d. h. mit dem Sohlenkörper 10c durch Verschweißung (Schmelzverbindung) verbundenen Endzustand seine ebenflächige Form beibehält, wie aus Fig. 7 und 8 ersichtlich ist.

Fig. 5, 7 und 8 zeigen des weiteren, daß die innenseitige Decklage 15c durchgehende Ausnehmungen 37 bis 40 aufweist, die mit den Vertiefungen 32, 34, 35 und 36 im Sohlenkörper 10c kongruent sind. Die Ausnehmungen 37 bis 40 können dazu dienen, die Decklage 15c innerhalb der Spritzform (nicht gezeigt) mittels geeigneter Haltestifte oder dergleichen in der für die Montagestellung vorgesehenen Lage zu positionieren.

Zweckmäßigerweise besitzt die innere Decklage 15c - ähnlich wie auch bei den Ausführungsformen nach Fig. 1 bis 4 - eine zentral gelegene weitere Ausnehmung (in Fig. 5 bis 8 jedoch nicht gezeigt), die als Einspritzöffnung für das Material des Sohlenkörpers 10c fungieren kann.

Eine Besonderheit der Ausführungsform nach Fig. 5 bis 8 besteht schließlich darin, daß der Sohlenkörper 10c im Vorfußbereich A auf der Innenseite 13c - vorzugsweise während des Spritzvorganges eingeformte - wellenförmige Profilierungen 42, 43 aufweist (siehe insbesondere Fig. 5). Diese dienen einer (weiteren) Flexibilisierung der Sohle im Vorfußbereich, um eine Optimierung des Abrollprozesses beim Laufvorgang zu ermöglichen. Dieses Ziel wird begünstigt durch drei weitere Profilrillen 44, die in die Außenseite 11c des Sohlenkörpers 10c eingeformt sind (siehe insbesondere Fig. 6).

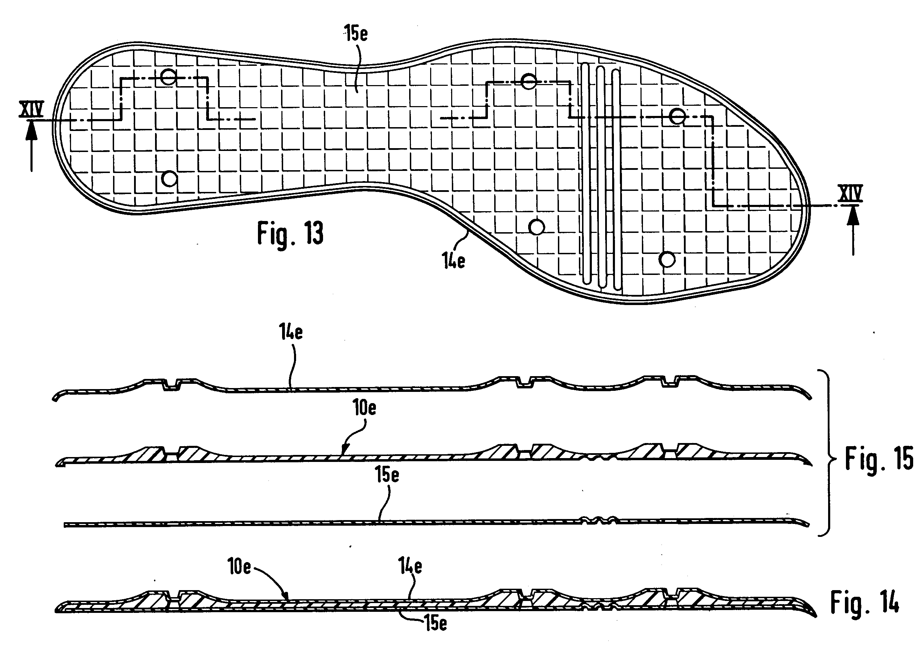

Die Variante nach Fig. 9 bis 12 entspricht weitgehend der im vorstehenden beschriebenen Ausführungsform nach Fig. 5 bis 8, wie ein Vergleich der betreffenden Zeichnungen unschwer erkennen läßt. Ein Unterschied besteht aber darin, daß die in Fig. 9, 11 und 12 mit 15d bezeichnete innenseitige Decklage etwas weiter in den Vorfußbereich A (Fig. 12) hineinreicht als bei der Ausführungsform nach Fig. 5 bis 8 und daß im Fußspitzenbereich des Sohlenkörpers 10d eine weitere innenseitige Decklage angeordnet ist, die in Fig. 9, 11 und 12 das Bezugszeichen 45 trägt. Die beiden innenseitigen Decklagen 15d und 45 sind lediglich durch drei in den Sohlenkörper 10d eingeformte Querrillen 46 getrennt, welche den Biegebereich der Sohle beim Abrollvorgang des Fußes besonders definieren. Laufsohlenseitig sind dagegen in den Sohlenkörper 10d bzw. in die diesen dort durchgehend beschichtende außenseitige Decklage 14d - im Gegensatz zur Ausführungsform nach Fig. 5 bis 8 - keine rillenförmigen Profilierungen eingearbeitet (siehe insbesondere Fig. 10).

Die Variante nach Fig. 13 bis 15 entspricht in ihrem laufflächenseitigen Erscheinungsbild exakt der Darstellung nach Fig. 10, so daß hier auf eine nochmalige entsprechende Darstellung verzichtet werden konnte.

Aufbaumäßig besteht eine sehr weitgehende Übereinstimmung mit der Ausführungsform nach Fig. 9 bis 12 hinsichtlich der Gestaltung des in Fig. 13 bis 15 mit 10e bezifferten Sohlenkörpers und der diesen laufflächenseitig durchgehend beschichtenden Decklage 14e.

Eine Besonderheit besteht bei der Ausführungsform nach Fig. 13 bis 15 lediglich darin, daß der Sohlenkörper 10e auch innenseitig mit einer die gesamte Sohlenkörperfläche bedeckenden Decklage 15e beschichtet ist. Diese Variante zeichnet sich also durch einen komplett sandwichartigen Aufbau der Sohle aus. Eine solche Konzeption erweist sich vorteilhaft, wenn die Verwendung von recycliertem Material im Mittelpunkt steht. In diesem Fall müssen die vorder- und rückseitigen Decklagen 14e bzw. 15e nicht notwendigerweise steifer sein, als das Basismaterial des Sohlenkörpers 10e selbst. Der aus Fig. 13 bis 15 ersichtliche und im vorstehenden beschriebene spezielle Sohlenaufbau eignet sich damit ebenso zur Herstellung von Sohlen, bei denen keine örtliche Versteifung gefordert wird, vielmehr nur das Recycling-Material des Sohlenkörpers 10e technisch sicher und optisch kaschiert als wenig beanspruchtes Kernmaterial in erstklassiges Funktionsmaterial (nämlich die Decklagen 14e, 15e) "verpackt" werden soll.

Bei der überwiegenden Zahl der im vorstehenden beschriebenen Ausführungsformen wurde - wie bereits oben angedeutet - davon ausgegangen, daß als Decklagen des Sandwichaufbaus Zuschnitte aus flachem, folienartigem Material zum Einsatz kommen, die erst unter dem Einfluß des Spritzdrucks ihre Bauteilwölbung bzw. Profilierung erhalten. Diese Verfahrensmaßnahme wird auch in vielen Fällen bevorzugt, vornehmlich deshalb, weil keine zusätzlichen Formen und Arbeitsvorgänge zur Vorbereitung der Decklagen erforderlich sind, mit Ausnahme des Zuschnitts derselben. Dabei ist es möglich, Decklagen aus reinem Thermoplast-Folienmaterial zu verwenden, das in den meisten Fällen etwas steifer sein sollte als das Basismaterial der Sohle (Sohlenkörper). Es sind aber auch verschiedene Formen der Faserverstärkung einsetzbar, falls höhere Verstärkungsgrade erreicht werden sollen (sogenannte Faserverbundteile). Besonders bevorzugt werden Thermoplast-Decklagen, die mindestens eine Verstärkungsschicht in Form eines Flächengebildes aus hochsteifen Fasern, insbesondere Glas-, Carbon- oder Aramid-Fasern enthalten, wobei das Flächengebilde zumindest in der Hauptverstärkungsrichtung endlose und gerichtet verlaufende Fasern enthalten sollte. Derartige Decklagen haben eine besonders hohe Zugfestigkeit bei relativ geringer Biegesteifigkeit.

Es kann auch notwendig sein, anstelle flacher Zuschnitte vorgeformte Decklagen zu verwenden, insbesondere bei sehr komplexer Oberflächengeometrie, der sich flache Zuschnitte nicht mehr einwandfrei anpassen, oder bei sehr dicken oder steifen Decklagen.

Wenn Faserverbundteile mit mehr als einer Lage eines textilen Flächengebildes eingesetzt werden, wird wegen der großen Steifigkeit dieses Materials in den meisten Fällen ein Vorformen in einer separaten Preßform erforderlich sein. In einigen Fällen kann es aber auch ausreichen, die flächigen Zuschnitte der Decklagen in erwärmtem und thermoplastisch erweichtem Zustand in die Spritzform einzulegen.

Die Decklagen können auch thermoplastische Spritzteile sein, insbesondere, wenn über Länge und/oder Breite der betreffenden Decklage eine nicht konstante Materialdicke der Decklage erwünscht ist.

## Patentansprüche

1. Sohle für Sportschuhe, insbesondere für mit Greifelementen, wie Spikes, Nocken oder Stollen, ausgerüstete Sportschuhe, bestehend aus einer durch Schmelzverbindung hergestellten Kombination von Kunststoff-Materialien unterschiedlicher Steifigkeit,
dadurch gekennzeichnet, daß ein durchgehend aus einem flexiblen thermoplastischen Kunststoff bestehender Sohlenkörper (10, 10a, 10b, 10c, 10d, 10e) zumindest in denjenigen Bereichen, die eine Biegesteifigkeit der Sohle erfordern, sowohl außenseitig, d.h. laufflächenseitigen, wie auch auf der der Lauffläche abgewandten Innenseite sandwichartig jeweils mit einer Decklage (14, 14a, 14b, 14c, 14d, 14e bzw.15, 15b, 15c, 15d, 15e, 19 - 21) aus einem relativ zum Material des Sohlenkörpers zugfesten Kunststoffmaterial geringer Wandstärke beschichtet ist.

2. Sohle nach Anspruch 1,
dadurch gekennzeichnet, daß die innenseitige Decklage (15, 15b, 15c, 15d, 19 bis 21) von der außenseitigen (laufflächenseitigen) Decklage (14, 14a, 14b, 14c, 14d) in Fußlängsrichtung zumindest einseitig, vorzugsweise nach vorn und nach hinten, überragt wird.

3. Sohle nach Anspruch 1 oder 2,
dadurch gekennzeichnet, daß zumindest die innenseitige Decklage (15, 15b, 15c, 15d, 15e, 19 bis 21), vorzugsweise beide Decklagen (15, 15b, 15c, 15d, 15e, 19 bis 21 und 14), intarsienartig versenkt in dem Material des Sohlenkörpers (10, 10a, 10b, 10c, 10d, 10e) angeordnet sind, derart, daß sie mit der jeweils zugeordneten Sohlenfläche plan verläuft bzw. verlaufen.

4. Sohle nach Anspruch 1, 2 oder 3,
dadurch gekennzeichnet, daß zumindest eine, vorzugsweise beide zugfeste dünnwandige Decklagen (15, 15b, 15c, 15d, 15e, 19 bis 21 und 14) Faserverbundteile sind, die aus einer Matrix aus Kunststoff und in diese eingelegten synthetischen, vorzugsweise in Form von Geweben oder Gelegen vorliegenden, Verstärkungsfasern bestehen.

5. Sohle nach Anspruch 4,
dadurch gekennzeichnet, daß die als Faserverbundteil realisierte(n) Decklage(n) (15, 15b, 15c, 15d, 15e, 19 bis 21 und 14) folienartig ausgebildet ist/sind, wobei sie nur eine einzige Lage von Verstärkungsfasern aufweist/aufweisen.

6. Sohle nach Anspruch 4 oder 5,
dadurch gekennzeichnet, daß für die Faserverbundteile (Decklagen 15, 15b, 15c, 15d, 15e, 19 bis 21 und 14) ein Matrixmaterial dient, welches dem thermoplastischen Kunststoffmaterial des Sohlenkörpers (10, 10a, 10b, 10c, 10d, 10e) sehr ähnlich oder identisch ist.

7. Sohle nach Anspruch 4, 5 oder 6,
dadurch gekennzeichnet, daß als Verstärkungsfasern des die Decklage (15, 15b, 15c, 15d, 15e, 19 bis 21 und 14) bildenden Faserverbundteils hochsteife Fasern, vorzugsweise endlose Glas-, Carbon- oder Aramid-Fasern, vorgesehen sind, die innerhalb des Faserverbundteils - zumindest in der Hauptverstärkungsrichtung - gerichtet verlaufen.

8. Sohle nach Anspruch 1, 2 oder 3, mit einem Sohlenkörper aus elastomerem Material auf Polyamid 12-Basis,
dadurch gekennzeichnet, daß die Decklagen (14, 14a, 14b, 14c, 14d, 14e und/oder 15, 15b, 15c, 15d, 15e, 19 bis 21) aus modifiziertem Polyamid 12 bestehen.

9. Sohle nach einem oder mehreren der vorstehenden Ansprüche,
dadurch gekennzeichnet, daß der Sohlenkörper (10, 10a, 10b, 10c, 10d, 10e) aus recycliertem Polyamid- und/oder Polyurethan-Material, gegebenenfalls vermischt mit entsprechendem Neumaterial, besteht.

10. Sohle nach einem oder mehreren der vorstehenden Ansprüche, insbesondere nach Anspruch 2, 8 oder 9,
dadurch gekennzeichnet, daß die außenseitige Decklage (14a, 14b, 14c, 14d, 14e) die gesamte zugeordnete Fläche des Sohlenkörpers (10a, 10b, 10c, 10d, 10e) überdeckt, derart, daß sie die Lauffläche der Sohle bildet (Fig. 3 bis 15).

11. Sohle nach Anspruch 10,
dadurch gekennzeichnet, daß auf der von der Lauffläche abgewandten Innenfläche (13a) des Sohlenkörpers (10a) mehrere Decklagen (15, 19 bis 21) aus relativ zugfestem Kunststoffmaterial angeordnet sind (Fig. 3).

12. Sohle nach einem oder mehreren der vorstehenden Ansprüche,
dadurch gekennzeichnet, daß die innenseitige (15, 15b, 15c, 15d, 15e, 19 bis 21) und die außenseitige (laufflächenseitige) Decklage (14, 14a, 14b, 14c, 14d, 14e) ähnliche oder gleiche Eigenschaften, insbesondere ähnliche oder gleiche Dicke und/oder Steifigkeit, aufweisen.

13. Sohle nach einem oder mehreren der Ansprüche 1 bis 11,
dadurch gekennzeichnet, daß die innenseitige Decklage (15, 15b, 19 bis 21, 15c, 15d) ein Faserverbundteil und die außenseitige, vorzugsweise sich über die gesamte Sohlenlänge und -breite erstreckende, Decklage (14, 14a, 14b, 14c, 14d, 14e) ein nicht durch Fasern verstärktes Kunststoffteil ist.

14. Sohle nach einem oder mehreren der vorstehenden Ansprüche,
dadurch gekennzeichnet, daß der Sohlenkörper (10b) in Bereichen (22, 23, 24), die eine hohe Steifigkeit erfordern, aufgeschäumt ist (Fig. 4).

15. Verfahren zur Herstellung einer Sohle nach einem oder mehreren der vorstehenden Ansprüche durch Spritzen,
dadurch gekennzeichnet, daß die relativ zugfesten beidseitigen Decklagen (14, 14a, 14b, 14c, 14d, 14e und 15, 15b, 15c, 15d, 15e, 19 bis 21) in eine Spritzform eingelegt und an den zugeordneten Wandungen der Spritzform im Abstand voneinander gehalten werden und daß anschließend in den sich hierdurch ergebenden Zwischenraum das den Sohlenkörper (10, 10a, 10b, 10c, 10d, 10e) bildende Kunststoffmaterial eingespritzt wird.

16. Verfahren nach Anspruch 15,
dadurch gekennzeichnet, daß durch eine - vorzugsweise zentrisch angeordnete - durchgehende Ausnehmung (18) in der innenseitigen (von der Sohlenlauffläche abgewandten) Decklage (15, 15b) das den Sohlenkörper (10, 10a, 10b) bildende Kunststoffmaterial in den Zwischenraum zwischen den beabstandeten Decklagen (15, 15b und 14, 14a, 14b) eingespritzt wird.

17. Verfahren nach Anspruch 15 oder 16,
dadurch gekennzeichnet, daß dem in die Form eingespritzten, den Sohlenkörper (10b) bildenden Kunststoffmaterial ein thermisch aktivierbarer Treibmittelzusatz beigegeben wird.

18. Verfahren nach Anspruch 15, 16 oder 17, bei dem die Decklagen (14a, 14b, 14c, 14d, 14e, 15e) den Funktionen der Sohle gerechtwerdende Bauteil-Wölbungen erhalten,
dadurch gekennzeichnet, daß die in die Spritzform eingelegten, als Zuschnitte aus flachem folienartigen Kunststoffmaterial ausgebildeten Decklagen (14a, 14b, 14c, 14d, 14e, 15e) durch den Druck des eingespritzten Sohlenkörpermaterials gewölbt werden.

## Claims

1. A Sole for a sports shoe in particular for sports shoes fitted with gripper elements as spikes, studs or bosses and composed of a fusion-bonding implemented combination of plastics of different rigidities,
characterized in that a sole body (10, 10a, 10b, 10c, 10d, 10e) everywhere consisting of a flexible thermoplastic is coated like a sandwich at least in those sole zones requiring flexural strength both on the outside, i. e. tread-side, and also on the inside away from the tread each with a cladding layer (14, 14a, 14b, 14c, 14d, 14e respectively 15, 15b, 15c, 15d, 15e) consisting of a thin-walled plastic evincing tensile strength compared with the material of the sole body.

2. Sole defined in claim 1, characterized in that the inside cladding layer (15, 15b, 15c, 15d, 19 through 21) is projected by the outside (treadside) cladding layer (14, 14a, 14b, 14c, 14d) at least in the longitudinal foot direction, and preferably forward and rearward of the same.

3. Sole defined in claim 1 or 2, characterized in that at least the inside cladding layer (15, 15b, 15c, 15d, 15e, 19 through 21), preferably both cladding layers (15, 15b, 15c, 15d, 15e, 19 through 21 and 14), are affixed in inlaid manner in the material of the sole body (10, 10a, 10b, 10c, 10d, 10e), in such a way as to be extending flatly with the particular associated sole surface.

4. Sole defined in claim 1, 2 or 3, characterized in that at least one and preferably both thin-walled, tensively-resistant cladding layers (15, 15b, 15c, 15d, 15e, 19 through 21 and 14) are fiber composites composed of a plastic matrix and of synthetic reinforcing fibers preferably in the form of fabrics or mutually crossing fibers placed into said matrix.

5. Sole defined in claim 4, characterized in that the cladding layer(s) 15, 15b, 15c, 15d, 15e, 19 through 21 and 14) being realized as fiber composites are shaped as foil(s) comprising only one single layer of reinforcing fibers.

6. Sole defined in claims 4 or 5, characterized in that a matrix material very similar to or identical with the thermo-plastic of the sole body (10, 10a, 10b, 10c, 10d, 10e) is used for the fiber composites (cladding layers 15, 15b, 15c, 15d, 15e, 19 through 21 and 14).

7. Sole defined in claim 4, 5 or 6, characterized in that highly rigid fibers, preferably glass-, carbon- or aramide-fibers are used as the reinforcing fibers of the fiber composite forming the cladding layer (15, 15b, 15c, 15d, 15e, 19 through 21 and 14), said reinforcing fibers running in aligned manner at least in the main direction of reinforcement inside the said fiber composite.

8. Sole defined in claim 1, 2 or 3, comprising a sole body constituted of a polyamide-12 based elastomer, characterized in that the cladding layers (14, 14a, 14b, 14c, 14d, 14e and/or 15, 15b, 15c, 15d, 15e, 19 through 21) are composed of modified polyamide 12.

9. Sole defined in one or more of the above claims, characterized in that the sole body (10, 10a, 10b, 10c, 10d, 10e) is composed of a recycled polyamide and/or recycled polyurethane, if need be, mixed with a corresponding virgin material.

10. Sole defined in one or more of the above claims, in particular in claim 2, 8 or 9, characterized in that the outside cladding layer (14a, 14b, 14c, 14d, 14e) covers the full associated surface of the sole body (10a, 10b, 10c, 10d, 10e) in such manner that it forms the sole tread (Figs.3 through 15).

11. Sole defined in claim 10, characterized in that several cladding layers (15, 19 through 21) of a relatively tensile-resistant plastic are mounted on the inside surface (13a) away from the tread of the sole body (10a).

12. Sole defined in one or more of the above claims, characterized in that the inside cladding layer (15, 15b, 15c, 15d, 15e, 19 through 21) and the outside (tread-side) cladding layer (14, 14a, 14b, 14c, 14d, 14e) evince similar properties, in particular similar or identical thickness and/or rigidity.

13. Sole defined in one or more of claims 1 through 11, characterized in that the inside cladding layer (15, 15b, 19 through 21, 15c, 15d) is a fiber composite and in that the outside cladding layer (14, 14a, 14b, 14c, 14d, 14e) preferably extending over the entire length of the sole is a plastic component not reinforced by fibers.

14. Sole defined in one or more of the above claims, characterized in that the sole body (10b) is foam in those zones (22, 23, 24) requiring high strength (Fig. 4).

15. A method of producing a sole defined in one or more of the above claims using injection molding, characterized in that the cladding layers being of relatively tensile strength on each side (14, 14a, 14b, 14c, 14d, 14e respectively 15, 15b, 15c, 15d, 15e, 19 through 21) are placed in an injection mold and are kept mutually spaced apart against the walls of the injection mold and in that thereupon the plastic to form the sole body (10, 10a, 10b, 10c, 10d, 10e) is injected into the resulting gap.

16. Method defined in claim 15, characterized in that the plastic to form the sole body (10, 10a, 10b) is injected through a preferably centrally located and continuous aperture (18) in the inside (away from the tread) cladding layer (15, 15b), said plastic passing into the gap between the spaced-apart cladding layers (15, 15b respectively 14, 14a, 14b).

17. Method defined in claim 15 or 16, characterized in that an expansion additive, which can be thermally activated, is admixed to the plastic injected into the mold and forming the sole body (10b).

18. Method defined in claim 15, 16 or 17, wherein the cladding layers (14a, 14b, 14c, 14d, 14e, 15e) are curved to satisfy the sole function, characterized in that the planar, plastic foil blanks placed into the injection mold and serving as cladding layers (14a, 14b, 14c, 14d, 14e, 15e) are curved by the pressure of the injected sole-body material.

## Revendications

1. Semelle pour chaussures de sport, en particulier pour des chaussures de sport munies d'éléments mordants tels que des clous, des bossages ou des crampons, composée d'une combinaison réalisée sous forme d'assemblage par fusion de matières plastiques de diverses rigidités, caractérisée en ce que, au moins dans les parties qui nécessitent une rigidité à la flexion de la semelle, aussi bien du côté extérieur, c'est-à-dire du côté de la surface de marche que du côté intérieur opposé à la surface de marche, un corps de semelle (10, 10a, 10b, 10c, 10d, 10e) réalisé de manière continue dans une matière thermoplastique flexible est revêtu selon une structure sandwich, respectivement d'une couche de recouvrement (14, 14a, 14b, 14c, 14d, 14e et 15, 15b, 15c, 15d, 15e, 19 à 21) conçue dans une matière plastique résistante à la traction relativement à la matière du corps de la semelle et d'une épaisseur réduite de paroi.

2. Semelle selon la revendication 1, caractérisée en ce que la couche de recouvrement intérieure (15, 15b, 15c, 15d, 19 à 21) est dépassée par la couche de recouvrement (14, 14a, 14b, 14c, 14d) extérieure (du côté de la surface de marche), dans la direction longitudinale du pied, au moins d'un côté, de préférence vers l'avant et vers l'arrière.

3. Semelle selon la revendication 1 ou la revendication 2, caractérisée en ce qu'au moins la couche de recouvrement intérieure (15, 15b, 15c, 15d, 15e, 19 à 21) de préférence les deux couches de recouvrement (15, 15b, 15c, 15d, 15e, 19 à 21 et 14) est disposée/ sont disposées en étant insérée(s) façon marqueterie dans la matière du corps de semelle (10, 10a, 10b, 10c, 10d, 10e) de façon à former une surface plane avec la surface de semelle respectivement correspondante.

4. Semelle selon la revendication 1, 2 ou 3, caractérisée en ce qu'au moins une, de préférence les deux couches de recouvrement (15, 15b, 15c, 15d, 15e, 19 à 21 et 14) résistantes à la traction et à paroi mince sont des éléments composites renforcés par des fibres qui se composent d'une matrice en matière plastique et de fibres de renforcement synthétiques, insérées dans ladite matrice, présentes de préférence sous forme de tissus ou de nappes.

5. Semelle selon la revendication 4, caractérisée en ce que la(les) couche(s) de recouvrement (15, 15b, 15c, 15d, 15e, 19 à 21 et 14) réalisée(s) comme élément composite renforcé par des fibres est(sont) conçue(s) comme une feuille, ladite(lesdites) couche(s) ne présentant qu'une seule couche de fibres de renforcement.

6. Semelle selon la revendication 4 ou la revendication 5, caractérisée en ce que, pour les éléments composites renforcés par des fibres (couches de finition 15, 15b, 15c, 15d, 15e, 19 à 21 et 14), on utilise une matière de matrice qui ressemble beaucoup ou est identique à la matière thermoplastique du corps de semelle (10, 10a, 10b, 10c, 10d, 10e).

7. Semelle selon la revendication 4, 5 ou 6, caractérisée en ce qu'il est prévu comme fibres de renforcement de l'élément composite renforcé par des fibres et formant la couche de recouvrement (15, 15b, 15c, 15d, 15e, 19 à 21 et 14), des fibres très rigides, de préférence des fibres continues de verte, de carbone ou aramides, qui sont alignées à l'intérieur de l'élément composite renforcé par des fibres - au moins dans la direction de renforcement principale -.

8. Semelle selon la revendication 1, 2 ou 3, comportant un corps de semelle en matière élastomère sur une base de polyamide (12), caractérisée en ce que les couches de recouvrement (14, 14a, 14b, 14c, 14d, 14e et/ou 15, 15b, 15c, 15d, 15e, 19 à 21) sont réalisées en polyamide 12 modifié.

9. Semelle selon l'une ou plusieurs des revendications précédentes, caractérisée en ce que le corps de semelle (10, 10a, 10b, 10c, 10d, 10e) est réalisé dans une matière polyamide et/ou polyuréthanne recyclée, le cas échéant mélangée à une matière neuve correspondante.

10. Semelle selon l'une ou plusieurs des revendications précédentes, en particulier selon la revendication 2, 8 ou 9, caractérisée en ce que la couche de recouvrement (14a, 14b, 14c, 14d, 14e) extérieure recouvre toute la surface correspondante du corps de la semelle (10, 10a, 10b, 10c, 10d, 10e) de façon à former la surface de marche de la semelle (figures 3 à 15).

11. Semelle selon la revendication 10, caractérisée en ce que plusieurs couches de recouvrement (15, 19 à 21) réalisées dans une matière plastique relativement résistante à la traction sont disposées sur la surface intérieure (13a) du corps de la semelle (10a) ladite surface intérieure étant opposée à la surface de marche (figure 3).

12. Semelle selon l'une ou plusieurs des revendications précédentes, caractérisée en ce que la couche de recouvrement intérieure (15, 15b, 15c, 15d, 15e, 19 à 21) et la couche de recouvrement extérieure (du côté de la surface de marche) (14, 14a, 14b, 14c, 14d, 14e) présentent des propriétés analogues ou identiques, en particulier une épaisseur et/ou une rigidité analogues ou identiques.

13. Semelle selon l'une ou plusieurs des revendications 1 à 11, caractérisée en ce que la couche de recouvrement intérieure (15, 15b, 15c, 15d, 19 à 21) est un élément composite renforcé par des fibres et en ce que la couche de recouvrement extérieure (14, 14a, 14b, 14c, 14d, 14e), s'étendant de préférence sur toute la longueur et la largeur de la semelle, est un élément en matière plastique non renforcée par des fibres.

14. Semelle selon l'une ou plusieurs des revendications précédentes, caractérisée en ce que le corps de semelle (10b) est expansé dans des parties (22, 23, 24) qui nécessitent une forte rigidité (figure 4).

15. Procédé de fabrication d'une semelle selon l'une ou plusieurs des revendications précédentes, par injection, caractérisé en ce que les deux couches de recouvrement relativement résistantes à la traction (14, 14a, 14b, 14c, 14d, 14e et 15, 15b, 15c, 15d, 15e, 19 à 21) sont injectées dans un moule à injection et sont maintenues à distance sur les parois correspondantes du moule à injection et en ce que la matière plastique formant le corps de la semelle (10, 10a, 10b, 10c, 10d, 10e) est injectée ensuite dans l'interstice qui en résulte.

16. Procédé selon la revendication 15, caractérisé en ce que la matière plastique formant le corps de la semelle (10, 10a, 10b) est injectée dans l'interstice entre les couches de recouvrement (15, 15b et 14, 14a, 14b) situées à distance l'une de l'autre, par une épargne (18) - disposée de préférence au centre - dans la couche de recouvrement (15, 15b) intérieure (opposée à la surface de marche de la semelle).

17. Procédé selon la revendication 15 ou la revendication 16, caractérisé en ce qu'un agent moussant pouvant être activé thermiquement est ajouté à la matière plastique injectée dans le moule et formant le corps de la semelle (10b).

18. Procédé selon la revendication 15, 16 ou 17 dans lequel les couches de recouvrement (14a, 14b, 14c, 14d, 14e, 15e) ont des courbures de composant conformes aux fonctions de la semelle, caractérisé en ce que les couches de recouvrement (14a, 14b, 14c, 14d, 14e, 15e) insérées dans le moule à injection et conçues comme des découpes réalisées dans une matière plastique plane analogue à une feuille sont courbées par la pression de la matière injectée pour le corps de la semelle.
